# NEUE EUROPÄISCHE PATENTSCHRIFT

(11) **EP 0 858 862 B2**
(45) Veröffentlichungstag und Bekanntmachung des Hinweises auf die Entscheidung über den Einspruch: **06.09.2006**
(45) Hinweis auf die Patenterteilung: 28.08.2002
(21) Anmeldenummer: 98102504.2
(22) Anmeldetag: 13.02.1998
(51) Int. Cl.: B23Q 7/14, B23Q 11/00, B23Q 1/00, B23Q 16/02

(54) **Schnellspannzylinder mit Flüssigkeitsablauf**
Quick connect coupling with fluid discharge opening
Cylindre d'un raccord rapide avec évacuation du liquide

(30) Priorität: 14.02.1997 DE 29702577 U
(43) Veröffentlichungstag der Anmeldung: 19.08.1998
(73) Patentinhaber: Stark Spannsysteme GmbH, 6840 Götzis (AT)
(72) Erfinder: Stark, Emil, 6840 Götzis (AT)
(74) Vertreter: von Ahsen, Erwin-Detlef

(56) Entgegenhaltungen:
- US-A- 5 184 810
- US-A- 5 190 272

## Beschreibung

Gegenstand der vorliegenden Neuerung ist eine Vorrichtung nach dem Oberbegriff des Anspruchs 1, die häufig auch als Schnellspannzylinder bezeichnet wird.

Derartige Schnellspannzylinder sind in verschiedenen Ausführungsformen bekannt geworden. Alle diese Ausführungsformen haben gemeinsam, daß an einer Palette einer oder mehrere Einzugsbolzen angebracht sind. Diese Einzugsbolzen werden in die Schnellspannzylinder eingeführt und dort mit geeigneten technischen Mitteln, die nicht Schwerpunkt dieser Anmeldung sind, gehalten.

Üblicherweise sind diese Schnellspannzylinder nach unten abgeschlossen.

Bei der zerspanenden Bearbeitung von Werkstücken, die auf Paletten befestigt sind, die ihrerseits wieder an einer Bearbeitungsmaschine befestigt sind, werden in manchen Fällen nicht sämtliche vorhandenen Schnellspannzylinder genutzt. Dies führt dazu, daß diese Schnellspannzylinder im Bereich ihrer Aufnahmeöffnung für den Einzugsbolzen verschmutzt werden können, es können sich insbesondere das Kühlschmiermittel sowie Späne in der Aufnahmeöffnung sammeln.

Wenn nun in einer derart verschmutzten Aufnahmeöffnung ein Einzugsbolzen aufgenommen werden soll, so wird diese Aufnahme durch das Kühlschmiermittel und gegebenenfalls die Späne behindert. Es ist zwar in der Regel eine zuverlässige Aufnahme möglich, allerdings wird dann durch den eintretenden Einzugsbolzen das Schmiermittel aus der Aufnahmeöffnung herausgepreßt und verunreinigt die Umgebung. Es können hierbei auch Verletzungen auftreten, wenn das Schmiermittel z.B. einem Bediener in die Augen spitzt.

Wenn darüber hinaus Späne in der Aufnahmeöffnung enthalten sind, besteht die Gefahr, daß diese Späne sich zwischen dem Einzugsbolzen und zugeordneten Halteteilen des Schnellspannzylinders sammeln und diese Bauteile beschädigen.

Es gibt darüber hinaus verschiedene Bauformen von Schnellspannzylindern, die nachstehend noch genauer beschrieben werden, bei denen die Betriebssicherheit durch das Verbleiben des Kühlschmiermittels in der Aufnahmeöffnung gefährdet werden kann.

Es ist eine Spannvorrichtung gemäss dem oberbegriff des Anspruchs 1 bekannt (US 5,184,810 = EP 0450383), bei der ein Zentrierbolzen in einen Zylinderraum eines Ringkolbens einfügbar ist, zum zentrierten Spannen von mit Werkstücken belegten Paletten auf Maschinentischen. In dieser Schrift wird davon ausgegangen, dass im entspannten Zustand eine ebene Oberfläche gebildet ist, die leicht von Verunreinigungen befreit werden kann. Weitere Maßnahmen zur Beseitigung bereits in das Innere der Kupplungsorgane eingedrungener Schmutzpartikel sind nicht vorgesehen.

Aufgabe der vorliegenden Neurung ist es daher, eine Vorrichtung der eingangs genannten Art so weiterzubilden, daß sie zuverlässiger arbeitet und die Gefahrvon Verschmutzung und Verletzungen reduziert, wenn nicht ausschließt.

Neuerungsgemäß wird diese Aufgabe durch die Vorrichtung des Anspruchs 1 gelöst.

Der Gedanke der Neuerung besteht nun darin, die Aufnahmeöffnung für den Einzugsbolzen mit einem Ablauf zu versehen.

Durch das Vorsehen eines derartigen Ablaufs wird zwar nicht das Eindringen eines Kühlschmiermittels zusammen mit Spänen in die Aufnahmeöffnung vermieden, es wird aber sichergestellt, daß sich nur minimale Mengen in der Aufnahmeöffnung sammeln können. Der Schnellspannzylinder funktioniert dann trotz einer Verschmutzung durch das Kühlschiermittel einwandfrei und im wesentlichen genauso gut wie in völlig trockenem Zustand.

Dieser Ablauf ist bevorzugt so angebracht, daß das Kühlschmiermittel unter dem Einfluß der Schwerkraft nach unten ablaufen kann. Wenn der Schnellspannzylinder auf einer im wesentlichen planebenen Oberfläche gehalten ist, kann er, um einen derartigen Ablauf zu ermöglichen, zusätzlich an seiner Unterseite mit einer oder mehreren Nuten versehen sein. Der Ablauf selbst ist dann einfach als Verlängerung der Aufnahmeöffnung für den Einzugsbolzen ausgebildet.

Bei dieser Aufnahmeform bildet sich darüber hinaus ein Leerraum aus, der nicht von dem Einzugsbolzen überstrichen wird. In diesem Leerraum kann sich eine bestimmte Menge von Spänen sammeln, ehe die Betriebssicherheit des Schnellspannzylinders beeinträchtigt wird.

Es ist vorgesehen, die als Mittenbohrung ausgeführte Aufnahmeöffnung des Schnellspannzylinders gegenüber weiteren Teilen des Schnellspannzylinders, insbesondere gegenüber Spannfedern und/oder der Hydraulikkolben abzudichten. Durch diese Abdichtung wird erreicht, daß die genannten Bauteile nicht mit dem Kühlschmiermittel in Berührung kommen, also nichtverschmutzen und auch nicht rosten können.

Es ist darüber hinaus ebenfalls möglich, zum Verriegeln bzw. Einziehen des Einzugsbolzens in den Schnellspannzylinder eine oder mehrere Spannfedern zu verwenden zum Öffnen bzw. zum Lösen der Verriegelung einen oder mehrere Hydraulikzylinder. Wenn sich nun Kühlschmiermittel in dem dafür vorgesehenen Raum des Schnellspannzylinders sammelt, so wirkt dieses Kühlschmiermittel als Druckpolster entgegen der Wirkung der Hydraulikkolben. Zum Lösen der Verriegelung muß dann ein erhöhter Druck aufgebracht werden, der einerseits eine unnötige Engergieverschwendung darstellt, andererseits aufgrund des hohen vorliegenden Drucks zu einer Beschädigung des Schnellspannzylinders führen kann.

Im folgenden wird die Neuerung anhand von einer lediglich einen Ausführungsweg darstellenden Zeichnung näher erläutert. Hierbei gehen aus derZeichnung und ihrer Beschreibung weitere erfindungswesentliche Merkmale und Vorteile der Neuerung hervor.

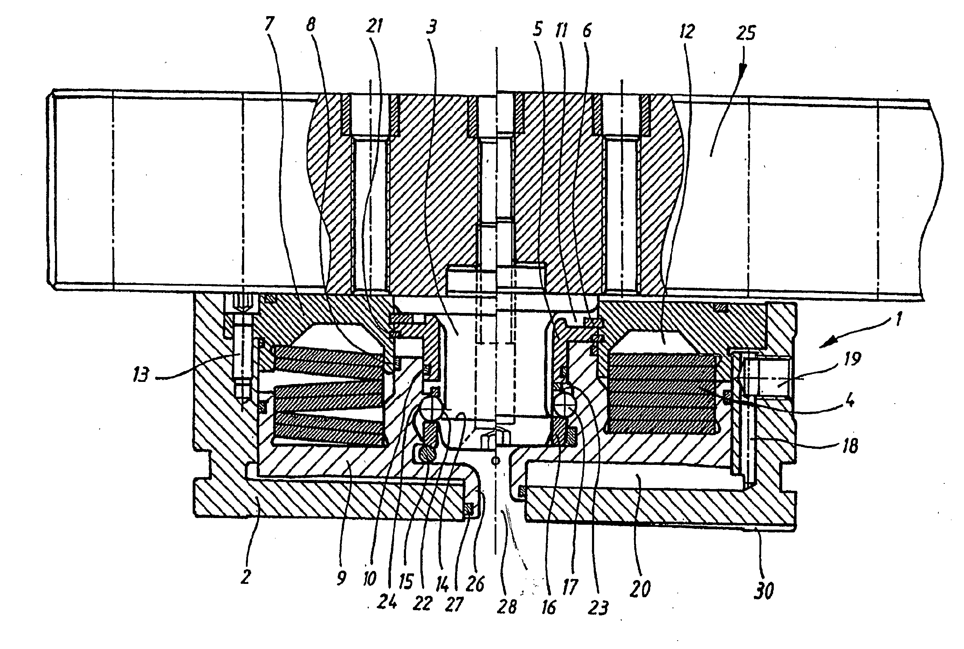

Die einzige Figur zeigt in der Schnittdarstellung links eine Ansicht mit eingespanntem Einzugsbolzen, rechts eine Ansicht mit gelockertem Einzugsbolzen.

Es ist ein Schnellspannzylinder 1 vorgesehen, der ein im wesentliches tellerförmiges Unterteil 2 aufweist. In dem Unterteil 2 ist verschieblich ein Hydraulikkolben 9 aufgenommen. Der Schnellspannzylinder 1 wird durch einen Deckel 7, der mit mehreren Schrauben 13 am Unterteil 2 befestigt ist, nach oben abgedeckt. Im Raum 12 zwischen dem Hydraulikzylider 9 und dem Deckel 7 sind eine oder mehrere Spannfedern.

Wird nun der Einzugsbolzen 3 in die Mittenbohrung 11 eingeführt, so wird er aufgrund der Wirkung der Spannfedern 4 nach unten gezogen und dort verriegelt.

Die Verriegelung erfolgt mittels Kugeln 17, die in einem Kugelkäfig 16 gelagert sind. Der Kugelkäfig 16 stützt sich über einen O-Ring 15 am Hydraulikkolben 9 ab. Die Kugeln 17 sind hierbei in einem Ringraum 24 des Kugelkäfigs 16 aufgenommen.

In der gespannten Stellung (linke Bildhälfte) befinden sich die Kugeln 17 im Eingriff mit der im Außenumfang des Einzugsbolzens 3 angeordneten Ringnut 22. Gleichzeitig liegen die Kugeln 17 mit einem Teil ihres Außenumfangs an einer Schräge im Bereich der Ringnut 23 des Hydraulikkolbens 9 an. Wird nun der Hydraulikkolben 9 durch die Federkraft der Spannfedern 4 nach unten gepreßt, so werden über die Schrägen die Kugeln 17 nach unten mitgenommen, drücken den Kugelkäfig 16 gegen den O-Ring 15 und ziehen den Einzugsbolzen 3 ebenfalls nach unten.

Zum Lösen bzw. Entriegeln wird ein Druckraum 20, der sich zwischen dem Hydraulikkolben 9 und dem Unterteil 2 des Schnellspannzylinders befindet, über eine Ölzuführeinrichtung 19 und eine Zuleitung 18 beaufschlagt. Hierdurch wird der Hydraulikkolben 9 nach oben gedrückt. Durch diese Bewegung wird der O-Ring 15 gespannt, der den Kugelkäfig 16 nach oben drückt. Bei einer weiteren Verschiebung des Hydraulikkolbens 9 nach oben gelangen die Kugeln 17 in den Bereich der radial auswärts liegenden Ringnut 23 des Hydraulikkolbens 9, wodurch sie gleichzeitig außer Eingriff mit der radial einwärts angeordneten Ringnut 22 des Einzugsbolzens 3 gelangen. Hierdurch wird der an einer Lochrasterpalette befestigte Einzugsbolzen 3 entriegelt.

Zwischen dem Hydraulikkolben 9 und dem Deckel 7 ist der Raum 12 gebildet, in dem die Spannfeder 4 angeordnet ist. Dieser Raum 12 wird durch einen Dichtring 5, der dem Deckel 7 zugeordnet ist, gegen das Unterteil 2 mittels eines O-Rings 10 abgedichtet. Der Hydraulikkolben 9 ist seinerseits mittels eines O-Rings 8 gegen den Deckel 7 abgedichtet.

Durch diese Dichtanordnung wird sichergestellt, daß kein Kühlschmiermittel in den Raum 12 eindringen kann. Dieses Kühlschmiermittel könnte nämlich einerseits zu einer Korrosion der Federn führen, würde aber andererseits die Wirkung des Hydraulikkolbens 9 beeinträchtigt. Neuerungsgemäß ist nun vorgesehen, die Mittenbohrung 11 nach unten zu verlängern, um auf diese Weise eine Ablauföffnung 28 zu schaffen. Um die Dichtwirkung sicherzustellen, wird der Hydraulikkolben 9 durch einen Ansatz 26 verlängert und über einen O-Ring 27 gegenüber der Ablauföffnung 28 abgedichtet. Wenn der Schnellspannzylinder 1 auf einer ebenen Fläche aufgenommen wird, sind darüber hinaus an dem Unterteil 2 eine oder mehrere Auslaufnuten 30 vorgesehen, die das Austreten des Kühlschmiermittels erleichtern.

Insgesamt wird mit dem Gegenstand der vorliegenden Neuerung eine sehr viel zuverlässigere Einspannung des Einzugsbolzen in dem Schnellspannzylinder erreicht.

### ZEICHNUNGSLEGENDE

1.Schnellspannzylinder
2.Unterteil
3.Einzugsbolzen
4.Spannfeder
5.Dichtungsring
6.Seegerring
7.Deckel
8.O-Ring
9.Hydraulikkolben
10.0-Ring
11.Mittenbohrung
12.Raum
13.Schraube
14.Ringflansch
15.0-Ring
16.Kugelkäfig
17.Kugel
18.Zuleitung
19.Ölzufuhreinrichtung
20.Druckraum
21.Seegerring
22.Nut
23.Nut
24.Ringraum
25.Lochrasterpalette
26.Ansatz
27.O-Ring
28.Ablauföffnung
30.Auslaufnut

## Patentansprüche

1. Vorrichtung zum Spannen von Paletten, die mit Werkstücken bestückt sind, auf Maschinentischen in lösbarer Verbindung, durch Einzugsbolzen (3), die mit einem Teil der Palette verbunden sind und die in einem Schnellspannzylinder der Vorrichtung einsetzbar sind, wobei der Einzugbolzen (3) mittels Kugeln (17) im Schnellspaner-zylinder gehalten ist, welche durch einen Hydraulik-Kolben (9) betätigbar sind, ***dadurch gekennzeichnet,* dass** die im Schnellspannzylinder (1) für den Einzugsbolzen (3) vorhandene Mittenbohrung (11) nach unten durch den Hydraulikkolben (9) und durch das Unterteil (2) hindurch als Ablauföffnung (28) weiter geführt ist und dass der Hydraulikkolben (9) im Bereich der Ablauföffnung (28) im Unterteil (2) mit einem Ansatz (26) versehen ist, der gegen das Gehäuse (2) mit einem O-Ring (27) abgedichtet ist.

2. Vorrichtung nach Anspruch 1, ***dadurch gekennzeichnet,* dass** das Unterteil (2) mit einer oder mehreren Nuten (30) versehen ist.

## Claims

1. Device for clamping pallets equipped with work pieces on supporting tables by a detachable fastening means by using feed pins (3) connected to one part of said pallet and adapted for being inserted into a quick action clamping cylinder (1) of the device wherein the feed pin (3) is held in the quick-action clamping cylinder (1) by means of balls (17) operable by a hydraulic piston (9), ***characterised in* that** the central bore (11) present for said feed pin (3) in said quick-action clamping cylinder (1) is passed further as discharge opening (28) in a downward direction through said hydraulic piston (9) and the lower part (2), and that said hydraulic piston (9) is provided with a projection (26) in the zone of said discharge opening ion said lower part (2), which projection is sealed against the housing (2) by means of an O-ring (28).

2. Device according to Claim 1, ***characterised in* that** said lower part (2) is provided with one or several grooves (30).

## Revendications

1. Dispositif à serrer des palettes munies de pièces à usiner sur des tables de machine moyennant un moyen de fixage amovible, en utilisant des boulons d'approche (3) reliés à une partie des ladite palette et aptes à être inséré dans uns cylindre de serrage (1) à action rapide du dispositif, le boulon d'approche (3) étant retenu dans le cylindre de serrage à action rapide au moyen des billes (17) aptes à être commandé par un piston hydraulique (9), ***caractérisé en* ce que** l'alésage central (11), qui est présent pour ledit boulon d'approche (3) dans ledit cylindre de serrage (1) à action rapide, est passé plus loin comme ouverture de décharge (28) en sens en bas à travers le piston hydraulique (9) et la partie inférieure (2), et **en ce que** ledit piston hydraulique (9) est muni d'une saillie (26) dans la zone de ladite ouverture de décharge dans ladite partie inférieure (2), ladite saille étant rendue étanche relativement au carter (2) moyennant une rondelle annulaire (28).

2. Dispositif selon la revendication 1, ***caractérisé en* ce que** ladite partie inférieure (2) est munie d'une ou plusieurs rainures (30).
